(19) Europäisches Patentamt
European Patent Office
Office européen des brevets

(11) **EP 3 533 541 A1**

(12) **EUROPEAN PATENT APPLICATION**
published in accordance with Art. 153(4) EPC

(43) Date of publication:
**04.09.2019 Bulletin 2019/36**

(51) Int Cl.:
**B22F 9/24** (2006.01)

(21) Application number: **17864041.3**

(22) Date of filing: **25.10.2017**

(86) International application number:
**PCT/JP2017/038465**

(87) International publication number:
**WO 2018/079582 (03.05.2018 Gazette 2018/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **25.10.2016 JP 2016208862**

(71) Applicant: **DOWA Electronics Materials Co., Ltd. Tokyo 101-0021 (JP)**

(72) Inventors:
• **SATO Kimitaka**
  **Tokyo 101-0021 (JP)**
• **FUJITA Hidefumi**
  **Tokyo 101-0021 (JP)**

(74) Representative: **Wagner & Geyer Partnerschaft mbB Patent- und Rechtsanwälte Gewürzmühlstrasse 5 80538 München (DE)**

(54) **METHOD FOR PRODUCING SILVER NANOWIRES**

(57)    [Problem] In the production of silver nanowires, the necessarily amount of the silver-containing liquid is decreased, and the yield of long silver nanowires is improved.

[Solution] A method for producing silver nanowires, including adding a silver-containing liquid to an alcohol solvent having dissolved therein a chloride, a bromide, an aluminum salt, an alkali metal hydroxide, and an organic protective agent, so as to perform reduction deposition of silver in a wire form in the alcohol solvent, the silver-containing liquid to be added having dissolved therein a silver compound in a silver concentration of from 3.5 to 32.0 mol/L. The silver-containing liquid used is preferably a water-containing solvent having a mass proportion of water of from 4.0 to 100.0%.

[Fig.6]

EP 3 533 541 A1

**Description**

Technical Field

The present invention relates to a method for producing silver nanowires that are useful as a material for forming a transparent conductive film, and the like.

Background Art

In the description herein, fine metal wires having a thickness of approximately 200 nm or less are referred to as "nanowires". Among them, silver nanowires are expected as a conductive material for imparting conductivity to a transparent substrate. By coating a liquid containing silver nanowires (i.e., a silver nanowire ink) on a transparent substrate, such as glass, PET (polyethylene terephthalate), and PC (polycarbonate), followed by removing the liquid component, the silver nanowires are in contact with each other on the substrate to form a conductive network, thereby achieving a transparent conductor.

As a method for producing silver nanowires, such a method has been known that PVP (polyvinylpyrrolidone) as an organic protective agent and a halogen compound are dissolved in an alcohol solvent, such as ethylene glycol, and in a reaction vessel having the solvent housed therein, a liquid having a silver compound dissolved therein (i.e., a silver-containing liquid) is added, so as to deposit metallic silver having a linear shape by utilizing the reduction power of the alcohol as the solvent. In recent years, a technique for synthesizing silver nanowires having a thinner and longer shape by using an organic protective agent replacing PVP has been developed.

For example, PTLs 1 and 2 describe a technique for synthesizing thin and long silver nanowires by using a copolymer having a polymerization composition of vinylpyrrolidone and a diallyldimethylammonium salt monomer as an organic protective agent. In particular, extremely thin silver nanowires having an average diameter of less than 30 nm can be synthesized according to the synthesis condition employed in Example 3 and the like of PTL 2. Thin and long silver nanowires are considerably advantageous for enhancing simultaneously both the conductivity and the optical characteristics (such as the anti-haze characteristics) of a transparent conductor.

In the aforementioned synthesis method of silver nanowires, it is necessary that the silver-containing liquid having the silver compound dissolved therein is prepared in advance by using a vessel separate from the reaction vessel. The solvent used in the silver-containing liquid is generally an alcohol of the same kind as the solvent in the reaction vessel. The silver compound used is frequently silver nitrate, which is readily available. The solubility of a silver compound, such as silver nitrate, in an alcohol solvent is generally not very large. Accordingly, in the synthesis of silver nanowires in an industrial scale, the amount of the silver-containing liquid that is necessarily prepared for adding to the reaction vessel becomes large. The large amount of the liquid to be added leads to the increase of the production cost.

PTL 3 describes that in the synthesis method by depositing silver nanowires in an alcohol solvent, the silver concentration of the silver-containing liquid to be added is approximately from 0.3 to 3.0 mol/L. The solvent used in the silver-containing liquid is the same as the alcohol solvent in the reaction vessel (which is a polyol, such as ethylene glycol), and in consideration of the solubility of the silver compound (such as silver nitrate) in the alcohol solvent at ordinary temperature, the silver concentration is generally necessarily controlled to approximately 3.0 mol/L or less. It is considered that in the invention of PTL 3, as the common-sense silver concentration that does not lead to the problem, the concentration range of approximately from 0.3 to 3.0 mol/L is employed as a requirement. The examples in PTLs 1 and 2 also employ the common-sense concentrations as the silver concentration of the silver-containing liquid to be added.

Citation List

Patent Literatures

PTL 1: JP-A-2015-180772
PTL 2: JP-A-2016-55283
PTL 3: U.S. Patent No. 8,814,979

Summary of Invention

Technical Problem

As described above, considerably thin silver nanowires having an average diameter of less than 30 nm can be synthesized in recent years. However, in the mass production thereof in an industrial scale, there are some problems that are necessarily solved for decreasing the production cost. Furthermore, as for the shape of the wires, a technique capable of stably synthesizing thinner and longer wires is required to be established. Under the circumstances, the invention targets the following item (1) as the first object, and furthermore describes measures for solving the problems shown in the following items (2) to (4).

(1) The necessarily amount of the silver-containing liquid (i.e., the total amount added including the solvent) to be added to the reaction vessel is decreased.
(2) The reduction reaction to silver in the silver-containing liquid is suppressed as much as possible.
(3) The average aspect ratio of the silver nanowire synthesized is enhanced.
(4) The yield of the silver nanowires having a large average length is enhanced.

Solution to Problem

The object of the item (1) can be achieved by increasing the silver concentration of the silver-containing liquid to be added. According to the investigations by the present inventors, in the case where the liquid temperature is increased for enhancing the solubility, the reduction to silver may excessively occur in the silver-containing liquid before the addition, and in the case where the temperature of the silver-containing liquid is decreased at the time of the addition to the reaction vessel, there are cases where a problem of reprecipitation of the silver compound occurs. However, as a result of the detailed investigations performed, it has been confirmed that even in the case where the solvent of the silver-containing liquid is an alcohol of the same kind as the solvent in the reaction vessel, thin and long silver nanowires can be sufficiently synthesized by a method of appropriately increasing the liquid temperature to enhance the solubility. Furthermore, it has been found that water contained as a solvent of the silver-containing liquid is advantageous for achieving the objects of the items (1) to (4). Only the addition of a small amount of water to the alcohol can further enhance the solubility of silver nitrate and can dissolve a large amount of silver at a temperature closer to ordinary temperature. It has been also found that water also functions as a "reduction inhibitor" inhibiting the reduction with the alcohol, and is a solvent substance that is significantly useful for preventing the reduction to silver in the silver-containing liquid. A solvent containing 100% of water may also be used. It has been confirmed that even in the case where a small amount of water is introduced from the silver-containing liquid to the reaction vessel, the synthesis of silver nanowires is not inhibited, and thin and long silver nanowires can be obtained. It has also been found that the case where the silver concentration of the silver-containing liquid is made appropriate by using a mixed solvent of an alcohol and water or a water solvent is significantly advantageous for the enhancement of the aspect ratio and the enhancement of the yield of long wires. The invention has been completed based on the aforementioned knowledge.

For achieving the objects, the following inventions are provided in the description herein.

[1] A method for producing silver nanowires, including adding a silver-containing liquid to an alcohol solvent having dissolved therein a chloride, a bromide, an aluminum salt, an alkali metal hydroxide, and an organic protective agent, so as to perform reduction deposition of silver in a wire form in the alcohol solvent, the silver-containing liquid to be added having dissolved therein a silver compound in a silver concentration of from 3.5 to 32.0 mol/L.
[2] The method for producing silver nanowires according to the item [1], wherein the silver-containing liquid contains a water-containing solvent having a mass proportion of water of from 1.0 to 100.0%, having dissolved therein the silver compound in a silver concentration of from 3.5 to 32.0 mol/L.
[3] The method for producing silver nanowires according to the item [1] or [2], wherein the silver-containing liquid contains a water solvent or a mixed solvent of water and an alcohol having a mass proportion of water of 5.0% or more, having dissolved therein the silver compound in a silver concentration of from 3.5 to 15.0 mol/L.
[4] The method for producing silver nanowires according to any one of the items [1] to [3], wherein the silver-containing liquid contains a water solvent or a mixed solvent of water and an alcohol having a mass proportion of water of 4.0% or more, having dissolved therein the silver compound in a silver concentration of from 3.5 to 15.0 mol/L.
[5] The method for producing silver nanowires according to any one of the items [1] to [4], wherein the silver compound is silver nitrate.
[6] The method for producing silver nanowires according to any one of the items [1] to [5], wherein the organic protective agent is a copolymer of vinylpyrrolidone and an additional monomer.
[7] The method for producing silver nanowires according to any one of the items [1] to [6], wherein the organic protective agent is a copolymer having a polymerization composition of vinylpyrrolidone and a diallyldimethylammonium salt monomer.
[8] The method for producing silver nanowires according to any one of the items [1] to [7], wherein the reduction deposition is performed in the presence of a chloride, a bromide, an aluminum salt, and an alkali metal hydroxide.

[9] The method for producing silver nanowires according to any one of the items [1] to [8], wherein the silver nanowires have an average diameter of less than 30.0 nm (for example, 15.0 nm or more and less than 30.0 nm).

In the description herein, the average diameter, the average length, and the average aspect ratio are in accordance with the following definitions.

Average Length

On a micrograph (such as an FE-SEM micrograph), the trace length from one end to the other end of one silver nanowire is designated as the length of the wire. The value obtained by averaging the lengths of the respective silver nanowires present on the micrograph is designated as the average length. For calculating the average length, the total number of the wires to be measured is 100 or more. Herein, for evaluating the average length in the stage where the silver nanowires recovered from the liquid after completing the reduction reaction are washed (i.e., in the stage before supplying to a purification step, such as crossflow filtration), it is necessary to calculate the average length of the wires excluding the impurities that are unavoidably contained in the recovered product, such as particle-like substances and short wire-like products. Accordingly, wire-like products having a length of less than 3.0 μm are excluded from the measuring object.

Average Diameter

On a micrograph (such as an FE-SEM micrograph), the average width between the contours on both sides in the thickness direction of one silver nanowire is designated as the diameter of the wire. The value obtained by averaging the diameters of the respective silver nanowires present on the micrograph is designated as the average diameter. For calculating the average diameter, the total number of the wires to be measured is 100 or more. Herein, wire-like products having a length of less than 3.0 μm are excluded from the measuring object, as described above.

Average Aspect Ratio

The average aspect ratio is calculated by substituting the average diameter and the average length for the following expression (1).

```
(average aspect ratio) = (average length (nm)) / (average

diameter (nm))    (1)
```

Advantageous Effects of Invention

According to the invention, in the stable production of thin and long silver nanowires, the total amount of the silver-containing liquid to be added to the reaction vessel can be largely decreased, so as to facilitate the industrial production of silver nanowires. Furthermore, the invention is also effective for the enhancement of the aspect ratio of silver nanowires and the enhancement of the yield of long wires.

Brief Description of Drawings

Fig. 1 is the SEM micrograph of the silver nanowires obtained in Example 5.
Fig. 2 is the SEM micrograph of the silver nanowires obtained in Example 7.
Fig. 3 is the SEM micrograph of the silver nanowires obtained in Example 8.
Fig. 4 is the SEM micrograph of the silver nanowires obtained in Example 9.
Fig. 5 is a graph exemplifying the length distribution of the silver nanowires after the synthesis.
Fig. 6 is a graph exemplifying the length distribution of the silver nanowires after the purification.
Fig. 7 is a graph exemplifying the diameter distribution of the silver nanowires after the synthesis.
Fig. 8 is a graph exemplifying the diameter distribution of the silver nanowires after the purification.

Description of Embodiments

In the invention, silver nanowires can be obtained based on the synthesis method described in PTLs 1 and 2. However, a novel technique is applied to the silver-containing liquid added to the reaction vessel, i.e., the silver concentration is increased, and water is used as a part or the whole of the solvent.

<Solvent A>

The liquid housed in the reaction vessel in advance will be described. The liquid is referred to as a "solution A" .

[Alcohol Solvent]

The kind of an alcohol as the solvent selected may be one that has an appropriate reduction power to silver, and can deposit metallic silver in a wire form. For example, an alcohol solvent containing one or more of ethylene glycol, propylene glycol (1,2-propanediol), 1,3-propanediol, 1,3-butanediol, 1,4-butanediol, and glycerin may be used. The alcohols may be used solely or as a mixture of two or more kinds thereof.

[Chloride]

For the reduction deposition of metallic silver in a wire form in the alcohol solvent, it has been known that the presence of a chloride ion having a function imparting anisotropy to the growing direction of deposition is effective. It is considered that a chloride ion has an effect of immediately etching the particular crystal plane of metallic silver in nucleation to prompt the growth of multiple twinning, thereby enhancing the abundance ratio of the seed crystals becoming wires. Various kinds of chlorides that are dissolved in an alcohol as the solvent can be applied to the chloride ion source. TBAC (tetrabutylammonium chloride $(CH_3CH_2CH_2CH_2)_4NCl$) and the like as an organic chlorine compound can be applied. Sodium chloride (NaCl), potassium chloride (KCl), hydrogen chloride (HCl), lithium chloride (LiCl), and the like, which are industrially readily available and inexpensive, are preferably applied. Copper(II) chloride ($CuCl_2$), which is soluble in the alcohol solvent, may also be used.

[Bromide]

It has been known that a bromide ion also has a function imparting anisotropy to the growing direction of deposition of metallic silver. The presence of a bromide ion in the alcohol solvent in addition to the chloride ion is significantly effective for providing thin and long silver nanowires. Various kinds of bromides that are dissolved in an alcohol as the solvent can be applied to the bromide ion source. CTAB (cetyltrimethylammonium bromide $(C_{16}H_{33})N(CH_3)_3Br$) and the like as an organic bromide compound can be applied. Sodium bromide (NaBr), potassium bromide (KBr), hydrogen bromide (HBr), lithium bromide (LiBr), and the like, which are industrially readily available and inexpensive, are preferably applied. The amount of the bromide added is extremely small, but the bromide is a significantly effective additive for imparting anisotropy.

[Aluminum Salt and Alkali Metal Hydroxide]

Silver nanowires having a large aspect ratio can be effectively synthesized by dissolving an aluminum salt and an alkali metal hydroxide in the prescribed proportions in the solvent, in which silver is to be deposited. It is estimated that an aluminum ion has a function activating the crystal plane for growing silver in a wire form and a function enhancing the reduction rate, and these functions are exhibited in the proper presence of a hydroxide ion.
The total molar ratio (Al/OH molar ratio) of the total Al amount of the aluminum salt dissolved in the solvent and the total hydroxide ion amount of the alkali metal hydroxide dissolved therein is preferably controlled to a range of from 0.01 to 0.40. The molar ratio (OH/Ag molar ratio) of the total hydroxide ion amount of the alkali metal hydroxide dissolved in the solvent and the total amount of Ag supplied from the silver compound is preferably in a range of from 0.005 to 0.50.
The alkali metal hydroxide used is industrially preferably, for example, one or more of lithium hydroxide, sodium hydroxide, and potassium hydroxide. The aluminum salt applied may be aluminum nitrate or aluminum chloride. Aluminum nitrate may be added in the form of aluminum nitrate nonahydrate $Al(NO_3)_3 \cdot 9H_2O$. In the case where aluminum chloride is used, aluminum chloride may also be used as the aforementioned chloride.

[Organic Protective Agent]

The organic protective agent covers the surface of the silver nanowire deposited through the reduction reaction to prevent the coarse growth thereof. The organic protective agent present on the surface of the resulting silver nanowires also has a function ensuring the dispersibility in a liquid medium. As an organic protective agent that causes the deposition of silver preferentially in only one direction to synthesize silver nanowires, PVP (polyvinylpyrrolidone) has been known. However, the silver nanowires synthesized by using PVP have a defect that the dispersibility thereof in an aqueous medium, to which an alcohol is added to improve the wettability to PET (polyethylene terephthalate) substrate or the like, is lowered.

As described in PTL 1, in the case where reduction deposition of silver is performed in a state where the aluminum salt is dissolved, the tendency of unidirectional deposition of silver is increased, and silver nanowires having a favorably thin and long shape can be synthesized with good yield even through PVP is not used as the organic protective agent. As an organic protective agent that can be applied instead of PVP, a copolymer having a polymerization composition of vinylpyrrolidone and an additional monomer is significantly effective. The polymerization composition thereof is preferably from 0.1 to 10% by mass of an additional cationic monomer and the balance of vinylpyrrolidone. Examples thereof include a copolymer having a polymerization composition of vinylpyrrolidone and a diallyldimethylammonium salt monomer, a copolymer having a polymerization composition of vinylpyrrolidone and ethylmaleimide, and a copolymer having a polymerization composition of vinylpyrrolidone and acetamide. The polymerization composition herein means that the copolymer has a structure containing the monomers that are copolymerized with each other, and it is not limited to whether or not the copolymer is a compound that is actually produced by a production process including a polymerization reaction process of the monomers. In the case where the improvement in wettability to a PET substrate or the like is important, this type of copolymer is advantageously applied.

<Solution B (Silver-containing Liquid)>

The "silver-containing liquid" to be added to the aforementioned liquid (liquid A) housed in the reaction vessel will be described. The liquid is referred to as a "liquid B".

[Silver Compound]

As the silver source for the reduction deposition of silver nanowires, a silver compound that is soluble in the solvent of the solution A and the solvent of the solution B. Examples thereof include silver nitrate, silver acetate, silver oxide, and silver chloride, and silver nitrate ($AgNO_3$) can be conveniently used in consideration of the solubility in the solvent and the cost.

[Solvent of Silver-containing Liquid]

The solvent of the solution B may be any of an alcohol solvent, a mixed solvent of an alcohol and water, and a water solvent. The alcohol used in the solvent is preferably constituted by one or more alcohol including the same kind as the alcohol used in the solvent of the solution A.

[Preparation of Silver-containing Liquid]

The total amount of the solution B (silver-containing liquid) to be added to the solution A can be decreased by increasing the silver concentration of the solution B. As a result of the various investigations performed, the total amount of the silver-containing liquid can be largely decreased as compared to the method having been employed, by making the silver concentration of 3.5 mol/L or more. It is more effective to make the silver concentration of 3.9 mol/L or more. In the case where the total amount of the silver-containing liquid is to be further largely decreased, the silver concentration is preferably 5.0 mol/L or more, and more preferably 10.0 mol/L or more.

According to the investigations by the inventors, with a solvent using only an alcohol, a silver-containing liquid having a silver concentration of from 3.5 to 4.5 mol/L can be obtained in such a manner that the liquid having silver nitrate added thereto is agitated in a state where the liquid is heated to approximately 40°C for approximately 1 hour. In this case, coloration of the silver-containing liquid is observed in the course of dissolution. The measurement of the absorbance of the liquid by the UV-Vis spectroscopy (UV-visible absorption spectroscopy) shows a slight increase in absorbance around 400 nm, from which it is considered that the coloration is caused by the formation of silver nanoparticles through reduction of silver ion. It has been confirmed that thin and long silver nanowires can be sufficiently synthesized by synthesizing wires by using the silver-containing liquid.

It has also been conformed that there is no problem in the synthesis of thin and long silver nanowires even in the case where the silver-containing liquid (solution B) that contains water. It has rather been found that thin and long wires can be readily obtained by using the silver-containing liquid that has a mass proportion of water of from 4.0 to 100.0% based on the total amount of an alcohol and water, and simultaneously a silver concentration in a range of from 3.5 to 15.0 mol/L. Specifically, in the length distribution of the silver nanowires recovered from the liquid after completing the reduction reaction, the proportion of long wires is increased, and the average aspect ratio is enhanced. Furthermore, in the homogenization of the length distribution by purification through crossflow filtration or the like in the later stage, the removal amount of the unnecessary short wires is decreased, so as to enhance the yield of the final silver nanowires (i.e., the yield of the silver nanowires with respect to silver used as the raw material).

Although the mechanism that thin and long wires can be readily obtained by optimizing the silver concentration of the silver-containing liquid (solution B) with a solvent containing water has not been yet been clarified at present, it is estimated that the appropriately high silver ion concentration at the moment of introduction to the solution A and the presence of water around the silver ions promote the formation of a large amount of fine silver nuclei, which conforms to the condition for immediately starting the unidirectional growth.

In the case where the solubility of the silver compound in the solvent is increased, and simultaneously the reduction of silver ions in the silver-containing liquid (solution B) is prevented, a solvent having a mass proportion of water of 5.0% or more based on the total amount of an alcohol and water is preferably used. In the mixed solvent of an alcohol and water, water functions as a "reduction inhibitor". The use of a solvent containing 100% of water (i.e., a water solvent) further increases the solubility. For example, by dissolving silver nitrate in a water solvent heated to approximately 80°C, the silver-containing liquid having a silver concentration of approximately 32.0 mol/L can be obtained. In this case, it has been confirmed that even when the temperature of the silver-containing liquid (solution B) is decreased to approximately 70°C at the time of addition to the solution A, the reprecipitation of silver nitrate can be prevented. It has also been confirmed that even when water is introduced from the solution B to the solution A in the reaction vessel, the synthesis of thin and long wires is not inhibited. There is rather the aforementioned advantage that the use of the silver-containing liquid (solution B) that appropriately contains water enhances the average aspect ratio of the silver nanowires and simultaneously improves the yield thereof.

<Production Method>

The solution A is placed in the reaction vessel, and the temperature of the liquid is made to 60°C or more and less than the boiling point of the solvent. The temperature may be generally in a range of 120°C or less. Under stirring the solution A, the solution B is added thereto. The period of time required for adding the total amount of the solution B is preferably in a range of 10 seconds or more and 5 minutes or less. The period of time may be managed to a range of 30 seconds or more and 3 minutes or less. The amount of silver that is added by the solution B may be controlled to a range of from 0.001 to 0.1 mol in terms of Ag with respect to 1 L in total of the alcohol solvent in the solution A and the solvent supplied by the solution B (e.g., an alcohol, an alcohol and water, or water). After the addition of the solution B, the prescribed temperature (for example, 60°C or more and 120°C or less) is retained under continuously stirring. For completely finishing the reduction deposition reaction of silver nanowires, the reaction time of 1 hour or more and 48 hours or less is preferably ensured. After completing the reaction, the temperature of the liquid is sufficiently lowered, and then the concentrate (solid content) is separated and recovered from the liquid by such a method as centrifugal separation or decantation, followed by washing the concentrate. The concentrate may be washed, for example, by repeating such an operation that the concentrate is dispersed in pure water or a prescribed liquid medium and then subjected to a solid-liquid separation operation, such as centrifugal separation. The concentrate after washing contains impurities, such as particle-like substances and short wire-like products. The concentrate may be purified, for example, through crossflow filtration described in PTL 2 or the like, and thereby silver nanowires having a controlled length distribution can be obtained.

Examples

<Comparative Example 1>

Propylene glycol (1,2-propanediol) as an alcohol solvent, silver nitrate as a silver compound, lithium chloride as a chloride, potassium bromide as a bromide, aluminum nitrate nonahydrate as an aluminum salt, lithium hydroxide as an alkali metal hydroxide, and a copolymer of vinylpyrrolidone and diallyldimethylammonium nitrate (the copolymer was produced with 99% by mass of vinylpyrrolidone and 1% by mass of diallyldimethylammonium nitrate, weight average molecular weight: 75,000) as an organic protective agent were prepared.

[Solution A]

At ordinary temperature, 0.30 g of a propylene glycol solution having a content of lithium chloride (produced by Sigma-Aldrich Corporation) of 10% by mass, 0.54 g of a propylene glycol solution having a content of potassium bromide (produced by Wako Pure Chemical Industries, Ltd.) of 1% by mass, 0.03 g of lithium hydroxide (produced by Sigma-Aldrich Corporation), 0.31 g of a propylene glycol solution having a content of aluminum nitrate nonahydrate (produced by Kishida Chemical Co., Ltd.) of 20% by mass, and 5.24 g of the copolymer of vinylpyrrolidone and diallyldimethylammonium nitrate were added and dissolved in 500 g of propylene glycol (produced by Wako Pure Chemical Industries, Ltd., guaranteed reagent), so as to prepare a solution A.

[Solution B]

4.25 g of silver nitrate was added to 20.00 g of propylene glycol as an alcohol solvent, and dissolved therein by agitating at 25°C, so as to prepare a silver-containing liquid (solution B). The resulting solution B was visually evaluated for the color of the liquid. The silver nitrate concentration in the liquid, the composition of propylene glycol and water, the dissolution condition (including the agitation temperature and time), and the color of the liquid are shown in Table 1.

[Synthesis of Silver Nanowires]

The solution A was placed in a reaction vessel and heated from ordinary temperature to 90°C under agitation in open air, and then the total amount of the solution B was added to the solution A over 1 minute. After completing the addition of the solution B, the agitation state was further retained, and the temperature was retained to 90°C for 24 hours. Thereafter, the reaction liquid was cooled to ordinary temperature.

[Washing]

20 g of the reaction liquid cooled to ordinary temperature was collected to a resin vessel for centrifugal separation, and pure water was added thereto to make the total mass including the vessel of 200 g. The vessel was subjected to centrifugal separation with a centrifugal separator at 3,000 rpm for 15 minutes. After the centrifugal separation, the concentrate and the supernatant were separated from each other, and the supernatant was removed. Such an operation was repeated 4 times that after dispersing the concentrate again by adding pure water thereto, pure water was added thereto to make the total mass including the vessel of 200 g as similar to the above, and the concentrate was recovered through centrifugal separation. The silver nanowires constituting the concentrate thus obtained were referred to as "silver nanowires after synthesis".

[SEM Observation of Silver Nanowires after Synthesis]

The concentrate after completing the washing was dispersed in pure water, and the dispersion liquid was collected on an observation table of SEM, and after evaporating water on the observation table, was observed with a high resolution FE-SEM (field emission scanning electron microscope, S-4700, produced by Hitachi, Ltd.). In five view fields randomly selected, the wires capable of being confirmed for the entire length thereof in all the view fields as measurement objects were measured for the average length and the average diameter according to the aforementioned definitions. At this time, wire-like products having a length of less than 3.0 $\mu$m were assumed to be impurities and excluded from the measurement objects. The total number of the wires as the measurement objects was 100 or more. The measurement of the diameter was performed with SEM micrographs taken in an ultra-high resolution mode, at a focal length of 7 mm, an acceleration voltage of 20 kV, and a magnification of 150,000, and the measurement of the length was performed with SEM micrographs taken in a normal mode, at a focal length of 12 mm, an acceleration voltage of 3 kV, and a magnification of 2,500. The average aspect ratio was obtained by substituting the average diameter and the average length for the expression (1). The results are shown in Table 1.

<Example 1>

An experiment was performed in the same manner as in Comparative Example 1 except that the solution B was produced in the following manner.

[Solution B]

4.25 g of silver nitrate was added to 6.50 g of propylene glycol as an alcohol solvent, and dissolved therein by agitating at 40°C, so as to prepare a silver-containing liquid (solution B). The resulting solution B was visually evaluated for the color of the liquid. The silver nitrate concentration in the liquid, the composition of propylene glycol and water, the dissolution condition (including the agitation temperature and time), and the color of the liquid are shown in Table 1.

The average length, the average diameter, and the average aspect ratio of the silver nanowires after synthesis obtained in the same manner as in Comparative Example 1 are shown in Table 1.

<Example 2>

An experiment was performed in the same manner as in Comparative Example 1 except that the solution B was produced in the following manner.

[Solution B]

4.25 g of silver nitrate was added to a mixed solvent of 6.37 g of propylene glycol and 0.13 g of pure water, and dissolved therein by agitating at 35°C, so as to prepare a silver-containing liquid (solution B). The resulting solution B was visually evaluated for the color of the liquid. The silver nitrate concentration in the liquid, the composition of propylene glycol and water, the dissolution condition (including the agitation temperature and time), and the color of the liquid are shown in Table 1.

The average length, the average diameter, and the average aspect ratio of the silver nanowires after synthesis obtained in the same manner as in Comparative Example 1 are shown in Table 1.

<Example 3>

An experiment was performed in the same manner as in Comparative Example 1 except that the solution B was produced in the following manner.

[Solution B]

4.25 g of silver nitrate was added to a mixed solvent of 6.22 g of propylene glycol and 0.28 g of pure water, and dissolved therein by agitating at 35°C, so as to prepare a silver-containing liquid (solution B). The resulting solution B was visually evaluated for the color of the liquid. The silver nitrate concentration in the liquid, the composition of propylene glycol and water, the dissolution condition (including the agitation temperature and time), and the color of the liquid are shown in Table 1.

The average length, the average diameter, and the average aspect ratio of the silver nanowires after synthesis obtained in the same manner as in Comparative Example 1 are shown in Table 1.

<Example 4>

An experiment was performed in the same manner as in Comparative Example 1 except that the solution B was produced in the following manner.

[Solution B]

4.25 g of silver nitrate was added to a mixed solvent of 5.98 g of propylene glycol and 0.50 g of pure water, and dissolved therein by agitating at 35°C, so as to prepare a silver-containing liquid (solution B). The resulting solution B was visually evaluated for the color of the liquid. The silver nitrate concentration in the liquid, the composition of propylene glycol and water, the dissolution condition (including the agitation temperature and time), and the color of the liquid are shown in Table 1.

The average length, the average diameter, and the average aspect ratio of the silver nanowires after synthesis obtained in the same manner as in Comparative Example 1 are shown in Table 1.

<Example 5>

An experiment was performed in the same manner as in Comparative Example 1 except that the solution B was produced in the following manner.

[Solution B]

4.25 g of silver nitrate was added to a mixed solvent of 5.73 g of propylene glycol and 0.75 g of pure water, and dissolved therein by agitating at 25°C, so as to prepare a silver-containing liquid (solution B). The resulting solution B was visually evaluated for the color of the liquid. The silver nitrate concentration in the liquid, the composition of propylene glycol and water, the dissolution condition (including the agitation temperature and time), and the color of the liquid are shown in Table 1.

The average length, the average diameter, and the average aspect ratio of the silver nanowires after synthesis obtained in the same manner as in Comparative Example 1 are shown in Table 1.

<Example 6>

An experiment was performed in the same manner as in Comparative Example 1 except that the solution B was produced in the following manner.

[Solution B]

4.25 g of silver nitrate was added to a mixed solvent of 5.47 g of propylene glycol and 1.00 g of pure water, and dissolved therein by agitating at 35°C, so as to prepare a silver-containing liquid (solution B). The resulting solution B was visually evaluated for the color of the liquid. The silver nitrate concentration in the liquid, the composition of propylene glycol and water, the dissolution condition (including the agitation temperature and time), and the color of the liquid are shown in Table 1.

The average length, the average diameter, and the average aspect ratio of the silver nanowires after synthesis obtained in the same manner as in Comparative Example 1 are shown in Table 1.

<Example 7>

An experiment was performed in the same manner as in Comparative Example 1 except that the solution B was produced in the following manner.

[Solution B]

4.25 g of silver nitrate was added to 1.92 g of pure water as a water solvent, and dissolved therein by agitating at 35°C, so as to prepare a silver-containing liquid (solution B). The resulting solution B was visually evaluated for the color of the liquid. The silver nitrate concentration in the liquid, the composition of propylene glycol and water, the dissolution condition (including the agitation temperature and time), and the color of the liquid are shown in Table 1.

The average length, the average diameter, and the average aspect ratio of the silver nanowires after synthesis obtained in the same manner as in Comparative Example 1 are shown in Table 1.

<Example 8>

An experiment was performed in the same manner as in Comparative Example 1 except that the solution A and the solution B were produced in the following manner.

[Solution A]

At ordinary temperature, 0.30 g of a propylene glycol solution having a content of lithium chloride (produced by Sigma-Aldrich Corporation) of 10% by mass, 0.54 g of a propylene glycol solution having a content of potassium bromide (produced by Wako Pure Chemical Industries, Ltd.) of 1% by mass, 0.03 g of lithium hydroxide (produced by Sigma-Aldrich Corporation), 0.31 g of a propylene glycol solution having a content of aluminum nitrate nonahydrate (produced by Kishida Chemical Co., Ltd.) of 20% by mass, and 5.24 g of the copolymer of vinylpyrrolidone and diallyldimethylammonium nitrate were added and dissolved in 518.8 g of propylene glycol (produced by Wako Pure Chemical Industries, Ltd., guaranteed reagent), so as to prepare a solution A.

[Solution B]

4.25 g of silver nitrate was added to 1.25 g of pure water as a water solvent, and dissolved therein by agitating at 60°C, so as to prepare a silver-containing liquid (solution B). The resulting solution B was visually evaluated for the color of the liquid. The silver nitrate concentration in the liquid, the composition of propylene glycol and water, the dissolution condition (including the agitation temperature and time), and the color of the liquid are shown in Table 1.

The average length, the average diameter, and the average aspect ratio of the silver nanowires after synthesis obtained in the same manner as in Comparative Example 1 are shown in Table 1.

<Example 9>

An experiment was performed in the same manner as in Comparative Example 1 except that the solution A and the solution B were produced in the following manner.

[Solution A]

At ordinary temperature, 0.30 g of a propylene glycol solution having a content of lithium chloride (produced by Sigma-Aldrich Corporation) of 10% by mass, 0.54 g of a propylene glycol solution having a content of potassium bromide (produced by Wako Pure Chemical Industries, Ltd.) of 1% by mass, 0.03 g of lithium hydroxide (produced by Sigma-Aldrich Corporation), 0.31 g of a propylene glycol solution having a content of aluminum nitrate nonahydrate (produced by Kishida Chemical Co., Ltd.) of 20% by mass, and 5.24 g of the copolymer of vinylpyrrolidone and diallyldimethylammonium nitrate were added and dissolved in 519.2 g of propylene glycol (produced by Wako Pure Chemical Industries, Ltd., guaranteed reagent), so as to prepare a solution A.

[Solution B]

4.25 g of silver nitrate was added to 0.83 g of pure water as a water solvent, and dissolved therein by agitating at 90°C, so as to prepare a silver-containing liquid (solution B). The resulting solution B was visually evaluated for the color of the liquid. The silver nitrate concentration in the liquid, the composition of propylene glycol and water, the dissolution condition (including the agitation temperature and time), and the color of the liquid are shown in Table 1.

The average length, the average diameter, and the average aspect ratio of the silver nanowires after synthesis obtained in the same manner as in Comparative Example 1 are shown in Table 1.

<Comparative Example 3>

An experiment was performed in the same manner as in Comparative Example 1 except that a copolymer of vinylpyrrolidone and ethylmaleimide (polymerization composition: vinylpyrrolidone: 99.25% by mass, ethylmaleimide: 0.75% by mass, weight average molecular weight: 80,000) was used as the organic protective agent, the solution A was prepared in the following manner, and the reaction temperature in the synthesis of silver nanowires was 115°C.

[Solution A]

At ordinary temperature, 3.024 g of a propylene glycol solution having a content of lithium chloride (produced by Sigma-Aldrich Corporation) of 1% by mass, 3.328 g of a propylene glycol solution having a content of potassium bromide (produced by Wako Pure Chemical Industries, Ltd.) of 0.25% by mass, 3.908 g of a propylene glycol solution having a content of lithium hydroxide (produced by Sigma-Aldrich Corporation) of 1% by mass, 2.080 g of a propylene glycol solution having a content of aluminum nitrate nonahydrate (produced by Kishida Chemical Co., Ltd.) of 2% by mass, and 6.640 g of the copolymer of vinylpyrrolidone and ethylmaleimide were added and dissolved in 500 g of propylene glycol (produced by Wako Pure Chemical Industries, Ltd., guaranteed reagent), so as to prepare a solution A.

The solution B was prepared under the same condition as in Comparative Example 1 as follows.

[Solution B]

4.25 g of silver nitrate was added to 20.00 g of propylene glycol as an alcohol solvent, and dissolved therein by agitating at 25°C, so as to prepare a silver-containing liquid (solution B).

The average length, the average diameter, and the average aspect ratio of the silver nanowires after synthesis obtained in the same manner as in Comparative Example 1 are shown in Table 1.

<Example 13>

An experiment was performed in the same manner as in Comparative Example 3 except that the solution B was produced in the following manner.

[Solution B]

4.25 g of silver nitrate and 0.13 g of pure water were added to 6.37 g of propylene glycol, and dissolved therein by agitating at 25°C, so as to prepare a silver-containing liquid (solution B). The resulting solution B was visually evaluated for the color of the liquid. The silver nitrate concentration in the liquid, the composition of propylene glycol and water, the dissolution condition (including the agitation temperature and time), and the color of the liquid are shown in Table 1.
The average length, the average diameter, and the average aspect ratio of the silver nanowires after synthesis obtained in the same manner as in Comparative Example 1 are shown in Table 1.

<Comparative Example 4>

An experiment was performed in the same manner as in Comparative Example 1 except that a copolymer of vinylpyrrolidone and acetamide (polymerization composition: vinylpyrrolidone: 99.25% by mass, ethylmaleimide: 0.75% by mass, weight average molecular weight: 75,000) was used as the organic protective agent, the solution A was prepared in the following manner, and the reaction temperature in the synthesis of silver nanowires was 115°C.

[Solution A]

At ordinary temperature, 3.024 g of a propylene glycol solution having a content of lithium chloride (produced by Sigma-Aldrich Corporation) of 1% by mass, 3.328 g of a propylene glycol solution having a content of potassium bromide (produced by Wako Pure Chemical Industries, Ltd.) of 0.25% by mass, 3.909 g of a propylene glycol solution having a content of lithium hydroxide (produced by Sigma-Aldrich Corporation) of 1% by mass, 4.160 g of a propylene glycol solution having a content of aluminum nitrate nonahydrate (produced by Kishida Chemical Co., Ltd.) of 2% by mass, and 38.735 g of the copolymer of vinylpyrrolidone and acetamide were added and dissolved in 500 g of propylene glycol (produced by Wako Pure Chemical Industries, Ltd., guaranteed reagent), so as to prepare a solution A.
The solution B was prepared under the same condition as in Comparative Example 1 as follows.

[Solution B]

4.25 g of silver nitrate was added to 20.0 g of propylene glycol as an alcohol solvent, and dissolved therein by agitating at 25°C, so as to prepare a silver-containing liquid (solution B).
The average length, the average diameter, and the average aspect ratio of the silver nanowires after synthesis obtained in the same manner as in Comparative Example 1 are shown in Table 1.

<Example 14>

An experiment was performed in the same manner as in Comparative Example 4 except that the solution B was produced in the following manner.

[Solution B]

4.25 g of silver nitrate and 0.13 g of pure water were added to 6.37 g of propylene glycol, and dissolved therein by agitating at 25°C, so as to prepare a silver-containing liquid (solution B). The resulting solution B was visually evaluated for the color of the liquid. The silver nitrate concentration in the liquid, the composition of propylene glycol and water, the dissolution condition (including the agitation temperature and time), and the color of the liquid are shown in Table 1.
The average length, the average diameter, and the average aspect ratio of the silver nanowires after synthesis obtained in the same manner as in Comparative Example 1 are shown in Table 1.

<Comparative Example 5>

An experiment was performed in the same manner as in Comparative Example 1 except that ethylene glycol was used as the alcohol solvent, PVP (polyvinylpyrrolidone, weight average molecular weight: 55,000) was used as the organic protective agent, and the solution A and the solution B were prepared in the following manner.

[Solution A]

At ordinary temperature, 5.60 g of an ethylene glycol solution having a content of tetrabutylammonium chloride (produced by Wako Pure Chemical Industries, Ltd.) of 5% by mass and 16.72 g of the PVP were added and dissolved in 538.46 g of ethylene glycol (produced by Wako Pure Chemical Industries, Ltd., guaranteed reagent), so as to prepare a solution A.

[Solution B]

4.25 g of silver nitrate was added to 21.54 g of ethylene glycol, and dissolved therein by agitating at 25°C, so as to prepare a silver-containing liquid (solution B). The resulting solution B was visually evaluated for the color of the liquid. The silver nitrate concentration in the liquid, the composition of ethylene glycol and water, the dissolution condition (including the agitation temperature and time), and the color of the liquid are shown in Table 1.

The average length, the average diameter, and the average aspect ratio of the silver nanowires after synthesis obtained in the same manner as in Comparative Example 1 are shown in Table 1.

<Example 15>

An experiment was performed in the same manner as in Comparative Example 5 except that the solution A and the solution B were produced in the following manner.

[Solution A]

At ordinary temperature, 5.60 g of an ethylene glycol solution having a content of tetrabutylammonium chloride (produced by Wako Pure Chemical Industries, Ltd.) of 5% by mass and 16.72 g of the PVP were added and dissolved in 553.14 g of ethylene glycol (produced by Wako Pure Chemical Industries, Ltd., guaranteed reagent), so as to prepare a solution A.

[Solution B]

4.25 g of silver nitrate and 0.13 g of pure water were added to 6.86 g of ethylene glycol, and dissolved therein by agitating at 25°C, so as to prepare a silver-containing liquid (solution B). The resulting solution B was visually evaluated for the color of the liquid. The silver nitrate concentration in the liquid, the composition of ethylene glycol and water, the dissolution condition (including the agitation temperature and time), and the color of the liquid are shown in Table 1.

The average length, the average diameter, and the average aspect ratio of the silver nanowires after synthesis obtained in the same manner as in Comparative Example 1 are shown in Table 1.

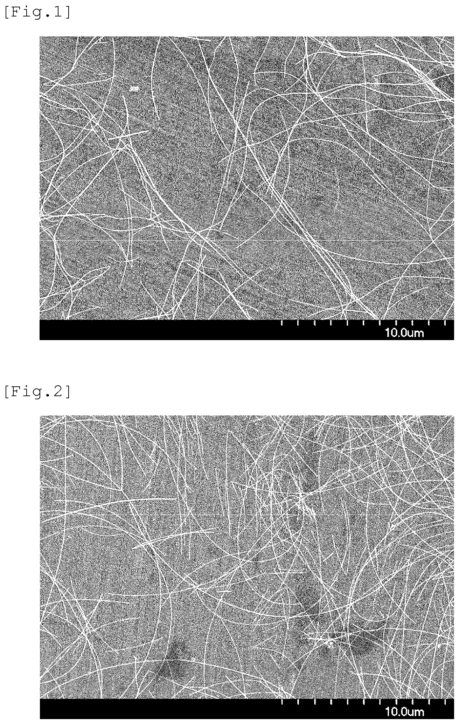

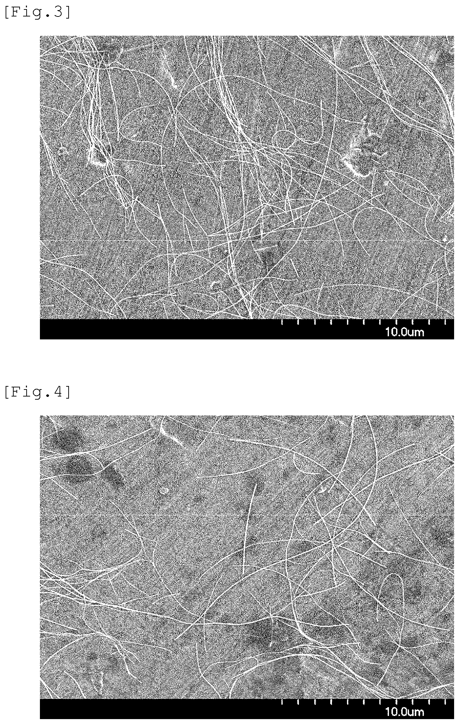

The SEM micrographs of the silver nanowires after synthesis in Example 5, Example 7, Example, 8, and Example 9 are shown in Fig. 1, Fig. 2, Fig. 3, and Fig. 4, respectively.

Table 1

| Class | Organic protective agent *1 | Alcohol solvent *2 | Silver-containing liquid (Solution B) | | | | | | | Silver nanowires | | |
|---|---|---|---|---|---|---|---|---|---|---|---|---|
| | | | Silver concentration (mol/L) | Solvent | | | Dissolution condition of silver nitrate | | Color | After synthesis | | |
| | | | | Amount mixed | | Water content (% by mass) | Temperature (°C) | Time (h) | | Average length (μm) | Average diameter (nm) | Average aspect ratio |
| | | | | Alcohol (g) | Water (g) | | | | | | | |
| Comparative Example 1 | VP-DADMA | PG | 1.3 | 20.00 | 0.00 | 0.0 | 25 | 0.5 | colorless | 13.7 | 23.9 | 573 |
| Example 1 | VP-DADMA | PG | 4.0 | 6.50 | 0.00 | 0.0 | 40 | 1.0 | colored | 13.3 | 23.9 | 556 |
| Example 2 | VP-DADMA | PG | 4.0 | 6.37 | 0.13 | 2.0 | 35 | 1.0 | slightly colored | 13.3 | 24.0 | 554 |
| Example 3 | VP-DADMA | PG | 4.0 | 6.22 | 0.28 | 4.3 | 35 | 0.5 | slightly colored | 15.0 | 24.0 | 625 |
| Example 4 | VP-DADMA | PG | 4.0 | 5.98 | 0.50 | 7.7 | 35 | 0.5 | colorless | 16.2 | 25.1 | 645 |
| Example 5 | VP-DADMA | PG | 4.0 | 5.73 | 0.75 | 11.6 | 25 | 0.5 | colorless | 16.0 | 25.0 | 640 |
| Example 6 | VP-DADMA | PG | 4.0 | 5.47 | 1.00 | 15.5 | 35 | 0.5 | colorless | 16.3 | 25.1 | 649 |
| Example 7 | VP-DADMA | PG | 13.0 | 0.00 | 1.92 | 100.0 | 35 | 0.5 | colorless | 15.2 | 24.3 | 626 |
| Example 8 | VP-DADMA | PG | 20.0 | 0.00 | 1.25 | 100.0 | 60 | 0.5 | colorless | 13.6 | 23.7 | 574 |
| Example 9 | VP-DADMA | PG | 30.0 | 0.00 | 0.83 | 100.0 | 90 | 0.5 | colorless | 13.6 | 25.7 | 529 |
| Comparative Example 3 | VP-EMI | PG | 1.3 | 20.0 | 0.00 | 0.0 | 25 | 0.5 | colorless | 9.5 | 35.4 | 268 |
| Example 13 | VP-EMI | PG | 4.0 | 6.37 | 0.13 | 2.0 | 25 | 0.5 | colorless | 13.7 | 29.8 | 460 |
| Comparative Example 4 | VP-VAA | PG | 1.3 | 20.0 | 0.00 | 0.0 | 25 | 0.5 | colorless | 10.8 | 33.5 | 322 |

EP 3 533 541 A1

(continued)

| Class | Organic protective agent *1 | Alcohol solvent *2 | Silver-containing liquid (Solution B) | | | | | | | Silver nanowires | | |
|---|---|---|---|---|---|---|---|---|---|---|---|---|
| | | | Silver concentration (mol/L) | Solvent | | | Dissolution condition of silver nitrate | | Color | After synthesis | | |
| | | | | Amount mixed | | Water content (% by mass) | Temperature (°C) | Time (h) | | Average length ($\mu$m) | Average diameter (nm) | Average aspect ratio |
| | | | | Alcohol (g) | Water (g) | | | | | | | |
| Example 14 | VP-VAA | PG | 4.0 | 6.37 | 0.13 | 2.0 | 25 | 0.5 | colorless | 16.1 | 28.2 | 571 |
| Comparative Example 5 | PVP | EG | 1.3 | 20.0 | 0.00 | 0.0 | 25 | 0.5 | colorless | 7.0 | 35.0 | 200 |
| Example 15 | PVP | EG | 4.0 | 6.37 | 0.13 | 2.0 | 25 | 0.5 | colorless | 13.9 | 29.5 | 471 |

*1) VP-DADMA: copolymer of vinylpyrrolidone and diallyldimethylammonium nitrate
VP-EMI: copolymer of vinylpyrrolidone and ethylmaleimide
VP-VAA: copolymer of vinylpyrrolidone and acetamide
PVP: polyvinylpyrrolidone
*2) PG: propylene glycol
EG: ethylene glycol

Even in Example 1 using only an alcohol as the solvent of the solution B (silver-containing liquid), a silver-containing liquid having a silver concentration of 4.0 mol/L was obtained at 40°C. In this case, coloration of the liquid was observed. In Examples 2 and 3, in which a small amount of water was added to an alcohol as the solvent, a silver-containing liquid having a silver concentration of 4.0 mol/L was obtained at 35°C. In these cases, slight coloration of the liquid was observed. This type of coloration was considered to be caused by the formation of silver nanoparticles formed through reduction of silver ions since the result of the measurement of absorbance by the UV-Vis spectroscopy performed separately showed a slight increase of the absorbance around 400 nm. However, the reduction amount thereof was slight, and there was no problem in the synthesis of thin and long silver nanowires. As compared to Comparative Example 1 using the silver-containing liquid having the ordinary silver concentration, the amount of the silver-containing liquid necessary for supplying the same amount of silver can be largely decreased by increasing the silver concentration of the silver-containing liquid to 4.0 mol/L.

Among the examples using the silver-containing liquid having a silver concentration of 4.0 mol/L, in Examples 3, 4, 5, and 6, in which the mass proportion of water based on the total amount of the alcohol and water was increased, the average aspect ratio was obviously increased as compared to Comparative Example 1. In these examples, the proportion of long wires in the length distribution of the silver nanowires was increased as compared to the comparative example. Among these, furthermore, in Examples 4, 5, and 6, in which the mass proportion of water based on the total amount of the solvent is large, no coloration of the liquid was observed, from which it was understood that water sufficiently functioned as a reduction inhibitor in the solution B.

In Example 7 using only water as the solvent of the solution B (silver-containing liquid), a silver-containing liquid having a silver concentration of 13.0 mol/L was obtained at ordinary temperature. In this case, the average aspect ratio was obviously increased as compared to Comparative Example 1. Accordingly, there was no particular problem, for example, the synthesis of thin and long wires was prevented by the presence of water. In Examples 8 and 9, in which only water was used as the solvent, and the solubility was increased by increasing the temperature, a silver-containing liquid having a further higher concentration was obtained, with which thin and long silver nanowires were able to be synthesized. The high-concentration silver-containing liquid (solution B) has a significantly large effect of decreasing the amount used of the silver-containing liquid (solution B) since the necessary amount of the liquid is considerably small.

The combinations of Comparative Example 3 and Example 13, Comparative Example 4 and Example 14, and Comparative Example 5 and Example 15 each were a combination of an example and a comparative example using the same kind of the organic protective agent. In all the combinations, in Examples 13, 14, and 15 using the silver-containing liquid (solution B) having water added thereto, the average aspect ratio of the synthesized silver nanowires was largely increased as compared to Comparative Examples 3, 4, and 5 using the silver-containing liquid (solution B) having no water added thereto.

<Comparative Example 2>

An experimental example was performed under condition closer to mass production by increasing the scale of the reaction vessel for synthesizing silver nanowires by approximately 10 times Comparative Example 1. The raw materials used were the same as in Comparative Example 1.

[Solutions A and B]

At ordinary temperature, 0.484 g of lithium chloride, 0.1037 g of potassium bromide, 0.426 g of lithium hydroxide, 4.994 g of a propylene glycol solution having a content of aluminum nitrate nonahydrate of 20% by mass, and 83.875 g of the copolymer of vinylpyrrolidone and diallyldimethylammonium nitrate were added and dissolved in 7,800 g of propylene glycol, so as to prepare a solution A. In a separate vessel, 67.96 g of silver nitrate was added to 320.0 g of propylene glycol as an alcohol solvent, and dissolved therein by agitating at 25°C, so as to prepare a silver-containing liquid (solution B). The resulting solution B was visually evaluated for the color of the liquid. The silver nitrate concentration in the liquid, the composition of propylene glycol and water, the dissolution condition (including the agitation temperature and time), and the color of the liquid are shown in Table 2.

The average length, the average diameter, and the average aspect ratio of the silver nanowires after synthesis obtained in the same manner as in Comparative Example 1 are shown in Table 2.

[Synthesis of Silver Nanowires]

The solution A was placed in a reaction vessel and heated from ordinary temperature to 90°C under agitation, and then the total amount of the solution B was added to the solution A over 1 minute. After completing the addition of the solution B, the agitation state was further retained, and the temperature was retained to 90°C for 24 hours. Thereafter, the reaction liquid was cooled to ordinary temperature.

[SEM Observation of Silver Nanowires after Synthesis]

20 g of the reaction liquid cooled to ordinary temperature was collected to a centrifugal separation tube, to which 150 g of pure water was added, and subjected to a centrifugal separation operation with a centrifugal separator at 3,000 rpm for 15 minutes. While a concentrate and a supernatant were observed, the supernatant was removed, and the concentrate was recovered. The washing operation was repeated several times, so as to provide "silver nanowires after synthesis".

The concentrate of the silver nanowires after synthesis was dispersed in pure water, and after evaporating water on the observation table, was observed with a high resolution FE-SEM (field emission scanning electron microscope), and as a result, it was confirmed that the solid content was silver nanowires. In five view fields randomly selected, the wires capable of being confirmed for the entire length thereof in all the view fields as measurement objects were measured for the average length and the average diameter according to the aforementioned definitions. The total number of the wires as the measurement objects was 100 or more. The measurement of the diameter was performed with SEM micrographs at a magnification of 150,000, and the measurement of the length was performed with SEM micrographs at a magnification of 2,500. The FE-SEM apparatus used and the observation condition were the same as described above. The average length, the average diameter, and the average aspect ratio of the silver nanowires after synthesis are shown in Table 2.

[Sedimentation]

1 L of the reaction liquid cooled to ordinary temperature was collected and transferred to a PFA bottle having a capacity of 35 L, and 20 kg of acetone was added thereto, followed by agitating for 15 minutes. Thereafter, the mixture was allowed to stand for 24 hours.

[Washing]

After allowing to stand, while a concentrate and a supernatant were observed, the supernatant was removed, and the concentrate was recovered. An appropriate amount of a PVP aqueous solution of 1% by mass was added to the resulting concentrate, and after agitating 3 hours, it was confirmed that the silver nanowires were redispersed. After agitation, 2 kg of acetone was added thereto, and the mixture was agitated for 10 minutes and then allowed to stand. After allowing to stand, while a concentrate and a supernatant were again observed, the supernatant was removed, and the concentrate was recovered. 160 g of pure water was added to the resulting concentrate, and the silver nanowires were redispersed therein. 2 kg of acetone was added to the silver nanowire dispersion liquid after redispersing, and the mixture was agitated for 30 minutes and then allowed to stand. After allowing to stand, while a concentrate and a supernatant were again observed, the supernatant was removed, and the concentrate was recovered. An appropriate amount of a PVP aqueous solution of 0.5% by mass was added to the resulting concentrate, and the mixture was agitated for 12 hours. In this washing step, silver nanoparticles and short silver nanowires as by-products are removed to some extent since these are hard to undergo sedimentation. However, nanowires having a length of approximately 1 $\mu$m or more are considerably difficult to remove by the method of repeating agglomeration and dispersion. Accordingly, nanowires of 5 $\mu$m or less, which have less contribution to conductivity in a transparent conductor and tend to be a factor causing haze therein, are substantially not removed but remain.

[Crossflow Purification]

The silver nanowire dispersion liquid obtained through the aforementioned washing was diluted with pure water to a silver nanowire concentration of 0.07% by mass, and purified by subjecting to crossflow filtration by using a porous ceramic filter. At this time, the necessary amount of the silver nanowires for providing the total amount of 52 L was prepared. The material of the ceramics was SiC (silicon carbide), and the filter had an outer diameter of 12 mm, an inner diameter of 9 mm, and a length of 500 mm. The filter had an average pore diameter of 5.9 $\mu$m measured by the mercury intrusion method using a mercury porosimeter, produced by Micromeritics Instrument Corporation.

The detailed conditions for the measurement of the pore distribution by the mercury intrusion method were as follows.

Measurement equipment: Autopore IV 9510

Measurement range: 440 to 0.003 $\mu$m in diameter

Contact angle of mercury: 130°

Surface tension of mercury: 485 dynes/cm

Pretreatment: 300°C $\times$ 1 hour (in air)

Mass of measurement specimen: 3.5 g

For sufficiently ensuring the measurement accuracy, the measurement data were obtained for 80 points in the measurement range of from 1 to 100 μm. The average pore diameter referred herein is a median diameter.

The crossflow filtration was performed by a circulation method, in which the liquid in the tank was circulated through the pump and the filter to the tank. The circulation was performed at a flow rate of 150 L/min. The circulation was performed for 12 hours while replenishing pure water to the tank in an amount corresponding to the liquid amount discharged as the filtrate, so as to provide a silver nanowire dispersion liquid after crossflow purification.

[Crossflow Concentrating]

The silver nanowire dispersion liquid after completing the crossflow purification was concentrated by utilizing crossflow filtration. The crossflow filtration was performed by using a circulation path having a filter having the same specification as above. The circulation was performed at a flow rate of 150 L/min. The circulation herein was performed while replenishing the silver nanowire dispersion liquid corresponding to the liquid amount discharged as the filtrate, so as to provide a silver nanowire dispersion liquid after crossflow concentrating.

The silver nanowires thus purified through the steps of crossflow purification and crossflow concentrating are hereinafter referred to as "silver nanowires after purification".

[SEM Observation of Silver Nanowires after Purification]

The silver nanowire dispersion liquid after purification was collected on an observation table of SEM, and after evaporating water on the observation table, was observed with a high resolution FE-SEM (field emission scanning electron microscope). The average length, the average diameter, and the average aspect ratio of the silver nanowires after purification were obtained in the same manner as in the SEM observation of the silver nanowires after synthesis. The results are shown in Table 2.

[Yield]

The silver nanowire dispersion liquid after purification was measured for the silver concentration in the liquid by the ICP (high frequency inductively coupled plasma) emission spectrometry. The total mass of silver in the dispersion liquid after purification was obtained from the silver concentration, and the yield was obtained according to the following expression (2).

```
Yield (%) = ((total mass of silver in dispersion liquid after

purification  (g))/(total  mass  of  silver  supplied  from

solution B (g)) × 100    (2)
```

The results are shown in Table 2.

<Example 10>

An experiment was performed in the same manner as in Comparative Example 2 except that the solution A and the solution B were produced in the following manner.

[Solutions A and B]

At ordinary temperature, 0.484 g of lithium chloride, 0.1037 g of potassium bromide, 0.426 g of lithium hydroxide, 4.994 g of a propylene glycol solution having a content of aluminum nitrate nonahydrate of 20% by mass, and 83.875 g of the copolymer of vinylpyrrolidone and diallyldimethylammonium nitrate were added and dissolved in 8,016 g of propylene glycol, so as to prepare a solution A. In a separate vessel, 67.96 g of silver nitrate was added to a mixed solvent of 95.7 g of propylene glycol and 8.0 g of pure water, and dissolved therein by agitating at 35°C, so as to prepare a silver-containing liquid (solution B). The resulting solution B was visually evaluated for the color of the liquid. The silver nitrate concentration in the liquid, the composition of propylene glycol and water, the dissolution condition (including the agitation temperature and time), and the color of the liquid are shown in Table 2.

The average length, the average diameter, and the average aspect ratio of the silver nanowires after synthesis, and the average length, the average diameter, the average aspect ratio, and the yield of the silver nanowires after purification obtained in the same manner as in Comparative Example 2 are shown in Table 2.

<Example 11>

An experiment was performed in the same manner as in Comparative Example 2 except that the solution A and the solution B were produced in the following manner. The experiment of the crossflow filtration and later was not performed at present.

[Solutions A and B]

At ordinary temperature, 0.484 g of lithium chloride, 0.1037 g of potassium bromide, 0.426 g of lithium hydroxide, 4.994 g of a propylene glycol solution having a content of aluminum nitrate nonahydrate of 20% by mass, and 83.875 g of the copolymer of vinylpyrrolidone and diallyldimethylammonium nitrate were added and dissolved in 8,017 g of propylene glycol, so as to prepare a solution A. In a separate vessel, 67.96 g of silver nitrate was added to a mixed solvent of 87.5 g of propylene glycol and 16.0 g of pure water, and dissolved therein by agitating at 35°C, so as to prepare a silver-containing liquid (solution B). The resulting solution B was visually evaluated for the color of the liquid. The silver nitrate concentration in the liquid, the composition of propylene glycol and water, the dissolution condition (including the agitation temperature and time), and the color of the liquid are shown in Table 2.
The average length, the average diameter, and the average aspect ratio of the silver nanowires after synthesis, and the average length, the average diameter, the average aspect ratio, and the yield of the silver nanowires after purification obtained in the same manner as in Comparative Example 2 are shown in Table 2.

<Example 12>

An experiment was performed in the same manner as in Comparative Example 2 except that the solution A and the solution B were produced in the following manner. The experiment of the crossflow filtration and later was not performed at present.

[Solutions A and B]

At ordinary temperature, 0.484 g of lithium chloride, 0.1037 g of potassium bromide, 0.379 g of lithium hydroxide, 4.995 g of a propylene glycol solution having a content of aluminum nitrate nonahydrate of 20% by mass, 83.875 g of the copolymer of vinylpyrrolidone and diallyldimethylammonium nitrate, and 30.80 g of pure water were added and dissolved in 8,017 g of propylene glycol, so as to prepare a solution A. In a separate vessel, 67.96 g of silver nitrate was added to 104.0 g of propylene glycol, and dissolved therein by agitating at 70°C, so as to prepare a silver-containing liquid (solution B). The resulting solution B was visually evaluated for the color of the liquid. The silver nitrate concentration in the liquid, the composition of propylene glycol and water, the dissolution condition (including the agitation temperature and time), and the color of the liquid are shown in Table 2.
The average length, the average diameter, and the average aspect ratio of the silver nanowires after synthesis, and the average length, the average diameter, the average aspect ratio, and the yield of the silver nanowires after purification obtained in the same manner as in Comparative Example 2 are shown in Table 2.

Table 2

| Class | Organic protective agent *1 | Alcohol solvent *2 | Silver-containing liquid (Solution B) | | | | | | |
|---|---|---|---|---|---|---|---|---|---|
| | | | Silver concentration (mol/L) | Solvent | | | Dissolution condition of silver nitrate | | Color |
| | | | | Amount mixed | | Water content (% by mass) | Temperature (°C) | Time (h) | |
| | | | | Alcohol (g) | Water (g) | | | | |
| Comparative Example 2 | VP-DADMA | PG | 1.3 | 320.0 | 0.0 | 0.0 | 25 | 0.5 | colorless |
| Example 10 | VP-DADMA | PG | 4.0 | 95.7 | 8.0 | 7.7 | 35 | 0.5 | colorless |
| Example 11 | VP-DADMA | PG | 4.0 | 87.5 | 16.0 | 15.5 | 25 | 0.5 | colorless |
| Example 12 | VP-DADMA | PG | 4.0 | 104.00 | 0.00 | 0.0 | 70 | 0.5 | colored |

| Class | Silver nanowires | | | | | | |
|---|---|---|---|---|---|---|---|
| | After synthesis | | | After purification | | | |
| | Average length (μm) | Average diameter (nm) | Average aspect ratio | Average length (μm) | Average diameter (nm) | Average aspect ratio | Yield (%) |
| Comparative Example 2 | 14.7 | 24.6 | 598 | 17.1 | 26.8 | 638 | 42.0 |
| Example 10 | 16.3 | 24.7 | 660 | 18.2 | 26.9 | 677 | 57.9 |
| Example 11 | 16.8 | 24.5 | 686 | 18.2 | 26.2 | 695 | 54.2 |
| Example 12 | 15.3 | 25.6 | 598 | 18.1 | 26.9 | 673 | 44.6 |

*1) VP-DADMA: copolymer of vinylpyrrolidone and diallyldimethylammonium nitrate
*2) PG: propylene glycol

In the case where the scale of the reaction vessel was increased, it was confirmed that in the examples (Examples 10 to 12), in which the silver concentration of the silver-containing liquid (solution B) to be added was increased, silver nanowires were synthesized that had an average aspect ratio that was equivalent to or higher than the case using the silver-containing liquid having the ordinary silver concentration (Comparative Example 2). Even in Comparative Example 2, the length distribution can be controlled to increase the average aspect ratio by removing short wires through purification utilizing crossflow filtration. However, in Examples 10 and 11, in which wires having a high average aspect ration at the time of synthesis were provided by using the silver-containing liquid (solution B) having water added thereto, the yield was largely enhanced at the time after purification as compared to Comparative Example 2.

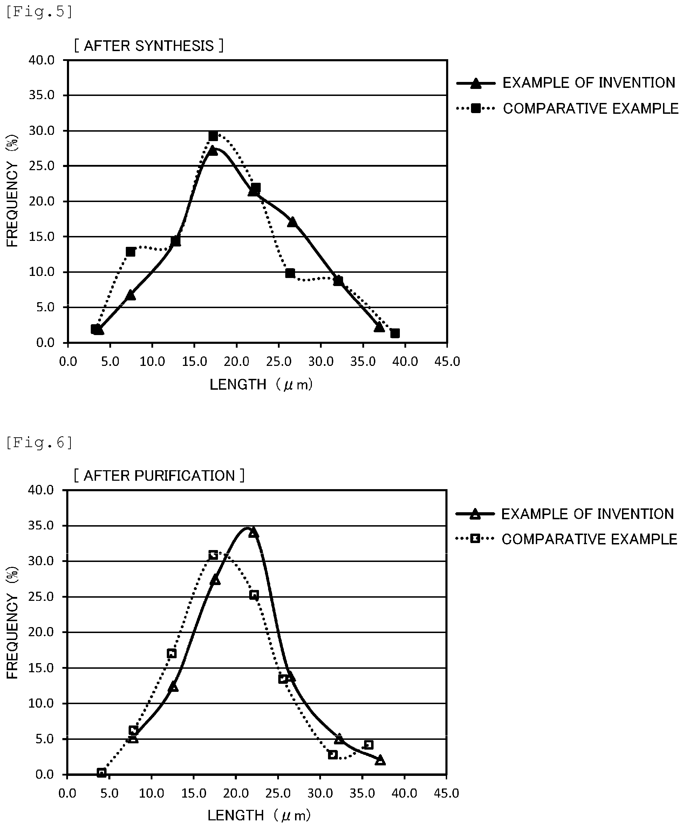

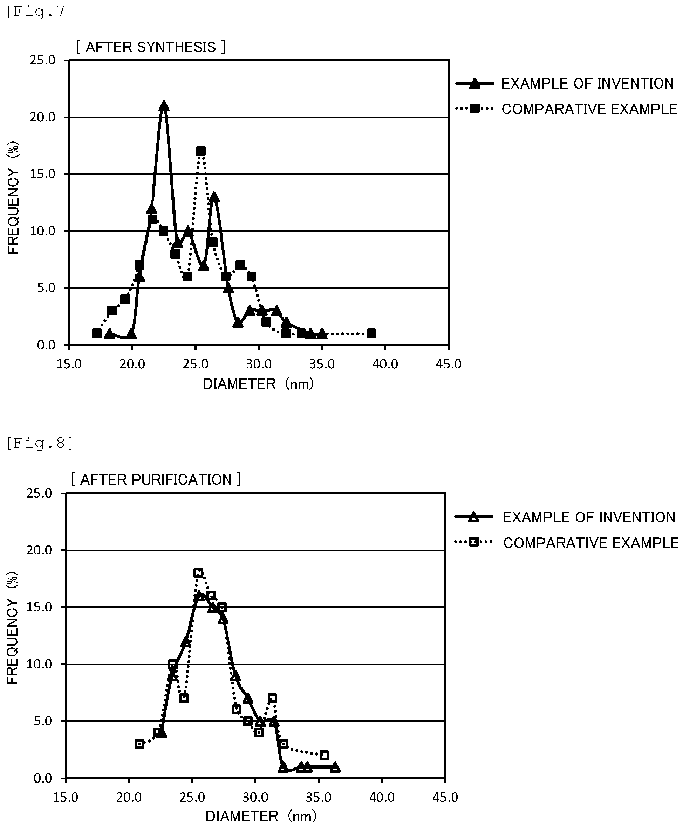

The length distributions and the diameter distributions of the silver nanowires after synthesis and after purification in Comparative Example 2 and Example 10 (example of the invention) are shown in Figs. 5 to 8. Fig. 5 shows the length distribution after synthesis, Fig. 6 shows the length distribution after purification, Fig. 7 shows the diameter distribution after synthesis, Fig. 8 shows the diameter distribution after purification. In the length distributions of the example of the invention using the silver-containing liquid (solution B) having a high silver concentration, the proportion of short wires was small, and the proportion of long wires was large at the time after synthesis (Fig. 5). By performing the purification utilizing crossflow filtration, in the example of the invention having a large proportion of long wires after synthesis, the peak of the length distribution was shifted right as compared to the comparative example (Fig. 6). As for the diameter distributions, there was some difference in distribution form between the example of the invention and the comparative example in the state after synthesis (Fig. 7), but the diameter distributions thereof became equivalent to each other after performing the purification utilizing crossflow filtration (Fig. 8).

Example 12 is an experimental example, in which the silver-containing liquid (solution B) having 4.0 mol/L of silver nitrate dissolved therein without the addition of water was used, and the solution A having water added thereto in advance was applied. In this case, the water content in the reaction liquid was approximately 1.9 times the Example 11, but the average aspect ratio of the synthesized silver nanowires was equivalent to Comparative Example 2. It was understood from the comparison between Example 12 and Examples 10 and 11 that the function facilitating the synthesis of silver nanowires having a high average aspect ratio achieved by the "addition of water" was conspicuously exhibited in the case where water was added to the silver-containing liquid (solution B).

## Claims

1. A method for producing silver nanowires, comprising adding a silver-containing liquid to an alcohol solvent having dissolved therein an organic protective agent, so as to perform reduction deposition of silver in a wire form in the alcohol solvent, the silver-containing liquid to be added having dissolved therein a silver compound in a silver concentration of from 3.5 to 32.0 mol/L.

2. The method for producing silver nanowires according to claim 1, wherein the silver-containing liquid contains a water-containing solvent having a mass proportion of water of from 1.0 to 100.0%, having dissolved therein the silver compound in a silver concentration of from 3.5 to 32.0 mol/L.

3. The method for producing silver nanowires according to claim 1, wherein the silver-containing liquid contains a water solvent or a mixed solvent of water and an alcohol having a mass proportion of water of 4.0% or more, having dissolved therein the silver compound in a silver concentration of from 3.5 to 15.0 mol/L.

4. The method for producing silver nanowires according to claim 1, wherein the silver-containing liquid contains a water solvent or a mixed solvent of water and an alcohol having a mass proportion of water of 5.0% or more, having dissolved therein the silver compound in a silver concentration of from 3.5 to 15.0 mol/L.

5. The method for producing silver nanowires according to claim 1, wherein the silver compound is silver nitrate.

6. The method for producing silver nanowires according to claim 1, wherein the organic protective agent is a copolymer of vinylpyrrolidone and an additional monomer.

7. The method for producing silver nanowires according to claim 1, wherein the organic protective agent is a copolymer having a polymerization composition of vinylpyrrolidone and a diallyldimethylammonium salt monomer.

8. The method for producing silver nanowires according to claim 1, wherein the reduction deposition is performed in the presence of a chloride, a bromide, an aluminum salt, and an alkali metal hydroxide.

9. The method for producing silver nanowires according to claim 1, wherein the silver nanowires have an average diameter of less than 30.0 nm.

[Fig.1]

[Fig.2]

[Fig.3]

10.0um

[Fig.4]

10.0um

[Fig.5]

**[ AFTER SYNTHESIS ]**

[Fig.6]

**[ AFTER PURIFICATION ]**

[Fig.7]

[ AFTER SYNTHESIS ]

[Fig.8]

[ AFTER PURIFICATION ]

## INTERNATIONAL SEARCH REPORT

International application No.

PCT/JP2017/038465

| | |
|---|---|
| A. CLASSIFICATION OF SUBJECT MATTER<br>Int. Cl. B22F9/24(2006.01)i | |

According to International Patent Classification (IPC) or to both national classification and IPC

| |
|---|
| B. FIELDS SEARCHED |

Minimum documentation searched (classification system followed by classification symbols)
Int. Cl. B22F1/00, B22F9/24,

Documentation searched other than minimum documentation to the extent that such documents are included in the fields searched
```
Published examined utility model applications of Japan    1922-1996
Published unexamined utility model applications of Japan  1971-2017
Registered utility model specifications of Japan          1996-2017
Published registered utility model applications of Japan  1994-2017
```

Electronic data base consulted during the international search (name of data base and, where practicable, search terms used)
JSTPIus(JDreaml ll)

| |
|---|
| C. DOCUMENTS CONSIDERED TO BE RELEVANT |

| Category* | Citation of document, with indication, where appropriate, of the relevant passages | Relevant to claim No. |
|---|---|---|
| X<br>Y | US 2009/0196788 A1 (WANG, Y.) 06 August 2009, paragraphs [0081]-[0089], [0289]-[0306] & WO 2009/128973 A2 | 1-5, 8-9<br>6-7 |
| Y | JP 2015-180772 A (DOWA HOLDINGS CO., LTD.) 15 October 2015, paragraphs [0040]-[0062] & US 2016/0368049 A1, paragraphs [0071]-[0138] & WO 2015/133453 A1 & EP 3115135 A1 & TW 201544610 A & CN 106068166 A & KR 10-2016-0129895 A | 6-7 |

☒ Further documents are listed in the continuation of Box C.　　☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search | Date of mailing of the international search report |
| Name and mailing address of the ISA/<br>　　Japan Patent Office<br>　　3-4-3, Kasumigaseki, Chiyoda-ku,<br>　　Tokyo 100-8915, Japan | Authorized officer<br><br>Telephone No. |

Form PCT/ISA/210 (second sheet) (January 2015)

**INTERNATIONAL SEARCH REPORT**

International application No.

PCT/JP2017/038465

C (Continuation).   DOCUMENTS CONSIDERED TO BE RELEVANT

| Category* | Citation of document, with indication, where appropriate, of the relevant passages | Relevant to claim No. |
|---|---|---|
| A | US 2013/0272919 A1 (KIM S.) 17 October 2013, paragraphs [0101]-[0139] & WO 2012/011774 A2 & KR 10-1307973 B1 & TW 201223877 A & CN 103153844 A | 1-9 |
| A | JP 2014-162946 A (THE UNIVERSITY OF SHIGA PREFECTURE) 08 September 2014, paragraphs [0042]-[0059] (Family: none) | 1-9 |

Form PCT/ISA/210 (continuation of second sheet) (January 2015)

**EP 3 533 541 A1**

## REFERENCES CITED IN THE DESCRIPTION

**Patent documents cited in the description**

- JP 2015180772 A
- JP 2016055283 A
- US 8814979 B